# EUROPEAN PATENT APPLICATION

(11) **EP 4 614 051 A1**
(43) Date of publication of application: **10.09.2025**
(21) Application number: 23885509.2
(22) Date of filing: 16.10.2023
(51) Int. Cl.: F16L 55/00

(54) **ATTACHMENT DEVICE AND METHOD FOR ATTACHING AND DETACHING INFORMATION ACQUISITION DEVICE**

(30) Priority: 02.11.2022 JP 2022176369
(71) Applicant: Kubota Corporation, Osaka 556-8601 (JP)
(72) Inventor: MORIMURA Masaru, Amagasaki-shi, Hyogo 660-0095 (JP); NISHINO Maiko, Amagasaki-shi, Hyogo 660-0095 (JP)
(74) Representative: Müller-Boré & Partner Patentanwälte PartG mbB
(86) International application number: PCT/JP2023/037332
(87) International publication number: WO 2024/095747

(57) **Abstract**

Provided is an attachment device that can suitably attach and detach an information acquisition device and a method for attaching and detaching the information acquisition device.

An attachment device capable of attaching an information acquisition device A that acquires information in a pipe conduit part 11 through which a fluid flows, the attachment device including a mount part 200, a holder part 300, and a restriction jig 400, in which the restriction jig 400 includes a first mount restriction part 412 that engages with the mount part 200 to restrict relative movement in a direction of axis with respect to the mount part 200, and a second mount restriction part 421 that restricts relative movement in a rotational direction, and the first mount restriction part 412 and the second mount restriction part 421 can be engaged with the mount part 200 by relatively moving the restriction jig 400 in the rotational direction with respect to the mount part 200.

## Description

### TECHNICAL FIELD

The present invention relates to a technique of an attachment device to which an information acquisition device that acquires information in a pipe conduit through which a fluid flows can be attached, and a method for attaching and detaching the information acquisition device.

### BACKGROUND ART

There has conventionally been known a technique of a device for acquiring information in piping. For example, Patent Literature 1 discloses a pipe inspection device that can inspect a pipe without stopping water flow in the pipe. The pipe inspection device can insert an inspection rod for inspecting the inside of a pipe into a hole formed in the middle of a pipe conduit. The inspection rod is attached to a through flange provided to communicate with the hole.

In the pipe inspection device that can inspect a pipe without stopping water flow in the pipe described in Patent Literature 1, it is considered that a flange formed in the pipe conduit and the through flange are fixed using a bolt, a nut, or the like. In such a case, it is assumed that it is difficult to secure a space for performing fastening work when attaching and detaching the through flange and the inspection rod, and the fastening work becomes complicated. Thus, there is a demand for an attachment device that can suitably attach and detach an information acquisition device and a method for attaching and detaching the information acquisition device.

### CITATION LIST

### PATENT LITERATURE

Patent Literature 1: Japanese Utility Model Application Laid-Open No. 63-62754

### SUMMARY OF INVENTION

### TECHNICAL PROBLEM

One aspect of the present disclosure has been made in view of the above circumstances, and an object of the present disclosure is to provide an attachment device capable of suitably attaching and detaching an information acquisition device, and a method for attaching and detaching the information acquisition device.

### SOLUTION TO PROBLEM

The problem to be solved by the present invention is as described above, and a solution to the problem will be described below.

An attachment device according to one aspect of the present disclosure is an attachment device capable of attaching an information acquisition device that acquires information in a pipe conduit through which a fluid flows, the attachment device including a mount part to be attached to the pipe conduit, the mount part including a through hole communicating with an opening formed in the pipe conduit, a holder part that is detachably attached to the mount part by being inserted into the through hole and to which the information acquisition device is to be attached, and a jig used for attaching and detaching the holder part to and from the mount part, in which the jig includes a first restriction part that engages with the mount part to restrict relative movement in a direction of axis of the opening with respect to the mount part, and a second restriction part that engages with the mount part to restrict relative movement in a rotational direction around an axis line of the opening with respect to the mount part, and the first restriction part and the second restriction part can be engaged with the mount part by relatively moving the jig in the rotational direction with respect to the mount part.

According to one aspect of the present disclosure, attachment and detachment of the information acquisition device can be suitably performed.

The mount part according to one aspect of the present disclosure includes a first projection projecting outward, the first restriction part includes a first engagement part that is open in the rotational direction and is engageable with the first projection as the first restriction part moves in the rotational direction, and the second restriction part includes a second engagement part that is open downward and is engageable with the first projection as the second restriction part moves downward in a case where positions of the second restriction part and the first projection in the rotational direction coincide with each other.

According to one aspect of the present disclosure, by engaging the first engagement part and the second engagement part with the first projection, the movement of the jig in the upward-downward direction and the rotational direction with respect to the mount part can be restricted.

The holder part according to one aspect of the present disclosure includes a fixing part to be detachably fixed to the mount part by a predetermined operation, and the jig includes a fixed part to which the fixing part detached from the mount part is to be detachably fixed.

According to one aspect of the present disclosure, the holder part can be easily detached by fixing the holder part to the jig.

The mount part according to one aspect of the present disclosure is formed with a cutout extending in the direction of axis, and the holder part includes a shaft part to which the information acquisition device is to be attached and in which a cable of the information acquisition device can be wired, a guide part provided in the shaft part and guided along the cutout, and
a cable outlet through which the cable inside the shaft part can be taken out to an outside of the holder part.

According to one aspect of the present disclosure, the information acquisition device can be positioned by guiding the guide part to the cutout.

The holder part according to one aspect of the present disclosure includes a shaft part to which the information acquisition device is to be attached, and a protective part disposed in the through hole of the mount part, the protective part being formed with an insertion hole through which the shaft part and the information acquisition device are inserted, the protective part being capable of protecting the information acquisition device.

According to one aspect of the present disclosure, by providing the protective part, the information acquisition device can be prevented from coming into contact with the mount part or the like when the holder part is attached or detached.

The jig according to one aspect of the present disclosure includes a third restriction part that restricts relative movement in the direction of axis with respect to the protective part in a state where the jig is engaged with the protective part, and the third restriction part can be engaged with the protective part by relatively moving the jig in the rotational direction with respect to the protective part in a state where engagement of the first restriction part and the second restriction part with respect to the mount part is released.

According to one aspect of the present disclosure, the relative movement of the protective part with respect to the jig in the direction of axis can be restricted only by relatively moving the jig with respect to the protective part in the rotational direction, and in this state, the protective part can be easily attached and detached using the jig.

The protective part according to one aspect of the present disclosure includes a second projection projecting outward with respect to the mount part, and the third restriction part includes a third engagement part that is open in the rotational direction and is engageable with the second projection as the third restriction part moves in the rotational direction.

According to one aspect of the present disclosure, the relative movement of the protective part with respect to the jig in the direction of axis can be restricted by engaging the third engagement part with the second projection.

The second projection according to one aspect of the present disclosure includes a pressure outlet through which a pressure of the fluid in the pipe conduit can be extracted.

According to one aspect of the present disclosure, the second projection can be used as a portion for extracting the pressure of the fluid.

A method for attaching and detaching an information acquisition device according to one aspect of the present disclosure is a method for attaching and detaching an information acquisition device, the method using the attachment device according to one aspect of the present disclosure, the method including engaging the first restriction part and the second restriction part with the mount part by rotating the jig in the rotational direction with respect to the mount part, and attaching and detaching the holder part to and from the mount part in a state where the first restriction part and the second restriction part are engaged with the mount part.

According to one aspect of the present disclosure, attachment and detachment of the information acquisition device can be suitably performed.

### ADVANTAGEOUS EFFECTS OF INVENTION

According to one aspect of the present disclosure, attachment and detachment of the information acquisition device can be suitably performed.

### BRIEF DESCRIPTION OF DRAWINGS

Fig. 1 is a front cross-sectional view showing an attachment device and a valve device according to a first embodiment of the present disclosure.
Fig. 2 is a front cross-sectional view showing a mount part, a holder part, and an information acquisition device.
Fig. 3 is a side cross-sectional view showing the mount part, the holder part, and the information acquisition device.
Fig. 4 is a front exploded cross-sectional view showing a connection part and the mount part.
Fig. 5 is a front exploded cross-sectional view showing the holder part.
Fig. 6(a) is a front cross-sectional view showing a restriction jig. Fig. 6(b) is a front exploded cross-sectional view showing the restriction jig.
Fig. 7(a) is a side cross-sectional view showing the restriction jig. Fig. 7(b) is a front exploded cross-sectional view showing the restriction jig.
Fig. 8(a) is a schematic view showing a state in which the restriction jig is lowering. Fig. 8(b) is a schematic view showing a state in which an outer part abuts on a first projection. Fig. 8(c) is a schematic view showing a state in which the restriction jig is rotating. Fig. 8(d) is a schematic view showing a state in which the restriction jig is engaged with the first projection.
Fig. 9 is a schematic view showing a positional relationship between the restriction jig, the first projection, and a second projection.
Fig. 10 is a side cross-sectional view showing a state in which the restriction jig is engaged with the first projection of the mount part.
Fig. 11 is a side cross-sectional view showing a state in which the holder part is being detached from the mount part with a jig for attachment and detachment.
Fig. 12 is a side view showing a state in which the restriction jig is engaged with the second projection of the protective part.
Fig. 13 is a side view showing a state in which the holder part and the protective part are being pulled up by the restriction jig.

### DESCRIPTION OF EMBODIMENT

In the following description, directions indicated by arrows U, D, F, B, L, and R in the drawings are defined as an upward direction, a downward direction, a forward direction, a rearward direction, a left direction, and a right direction, respectively. The drawings used in the following description are schematic views, and specific shapes, dimensions, and the like of each member are not limited to those illustrated.

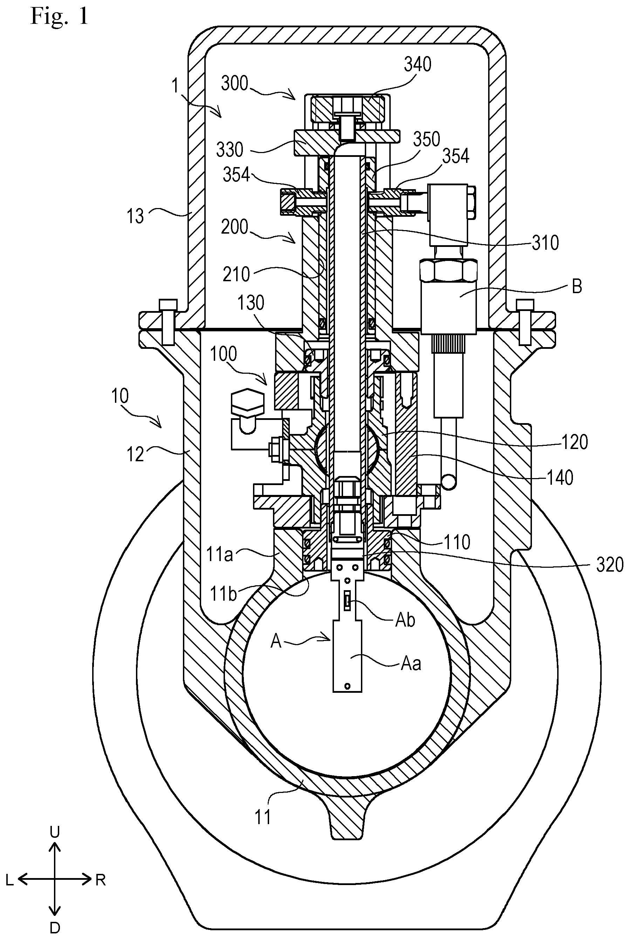

An attachment device 1 according to the present embodiment will be described below with reference to Figs. 1 to 7.

The attachment device 1 is for attaching an information acquisition device A that acquires information in a water pipe to a valve device 10. Hereinafter, the valve device 10 will be first described with reference to Fig. 1.

The valve device 10 shown in Fig. 1 is connected to a water pipe (buried pipe or the like) and is capable of partitioning a flow of tap water (fluid) flowing in the water pipe (for example, a gate valve). A valve body that partitions a flow of tap water is housed in the valve device 10. For convenience of description, Fig. 1 shows a cross section of a portion of the valve device 10 where the information acquisition device A is provided, and a portion where the valve body is provided is not shown. The valve device 10 is disposed inside a valve box (not shown) buried in the ground. The valve device 10 constitutes a part of a water pipe extending in the forward-rearward direction. The valve device 10 includes a pipe conduit part 11, a sensor housing part 12, and a sensor cover 13.

The pipe conduit part 11 constitutes a part of a water pipe, and is a portion through which tap water (fluid) flows. The pipe conduit part 11 is open in the forward-rearward direction, to which a water pipe is connected on the front side and the rear side. A protruding part 11a having a substantially cylindrical shape is formed above the pipe conduit part 11 so as to project upward. An opening 11b that is open in the upward-downward direction is formed in the protruding part 11a.

The sensor housing part 12 is a portion in which the attachment device 1 is housed. The sensor housing part 12 is formed in a substantially box shape that opens upward. The sensor housing part 12 is provided in a portion of the valve device 10 where the protruding part 11a is formed.

The sensor cover 13 is a portion that covers the attachment device 1 provided in the sensor housing part 12. The sensor cover 13 is formed in a substantially box shape that opens downward. The sensor cover 13 is detachably attached to the sensor housing part 12.

Next, the information acquisition device A will be described. The information acquisition device A illustrated in Figs. 1 to 3 acquires information in a water pipe. The information acquisition device A is formed of a plate part Aa formed in an elastically deformable plate shape and a strain gauge Ab provided on surfaces (front surface and rear surface) of the plate part Aa. As shown in Fig. 1, the information acquisition device A is attached to the attachment device 1, whereby the information acquisition device is disposed inside the pipe conduit part 11 of the valve device 10.

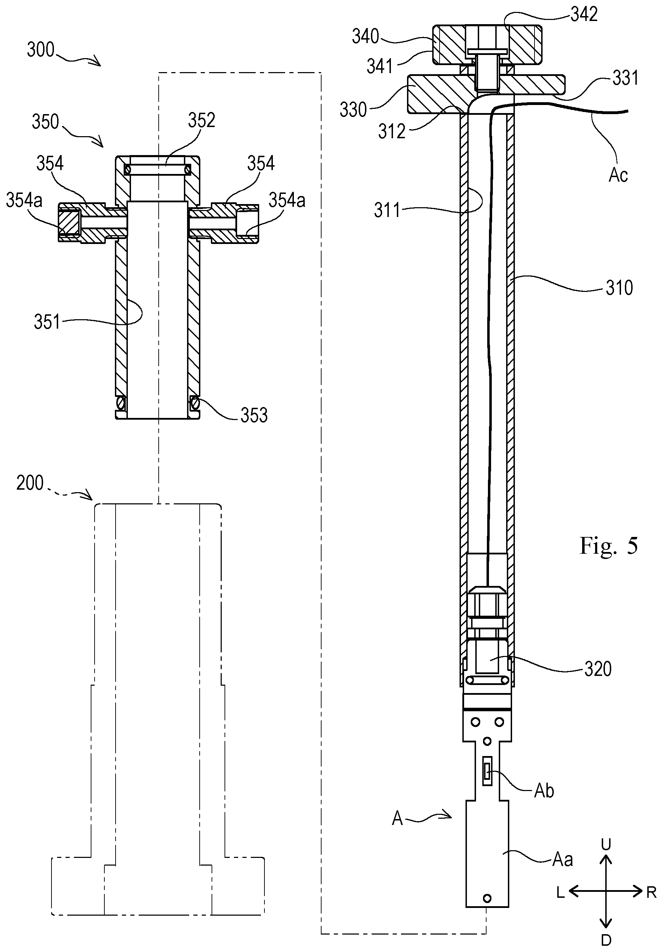

The information acquisition device A detects, with the strain gauge Ab, deformation of the plate part Aa caused by receiving a fluid force to acquire the flow velocity and the flowing direction of the water flowing in the water pipe. An appropriate cable Ac is connected to the strain gauge Ab (see Fig. 5). The acquisition result with the information acquisition device A can be transmitted to an external device (for example, an external server or the like) by an appropriate communication device connected to the cable Ac.

Next, the attachment device 1 will be described. The attachment device 1 shown in Figs. 1 to 7 is fixed to the protruding part 11a of the valve device 10 and supports the information acquisition device A such that the information acquisition device A is positioned in the pipe conduit part 11 of the valve device 10. The attachment device 1 includes a connection part 100, a mount part 200, a holder part 300, a restriction jig 400, and a jig for attachment and detachment 500.

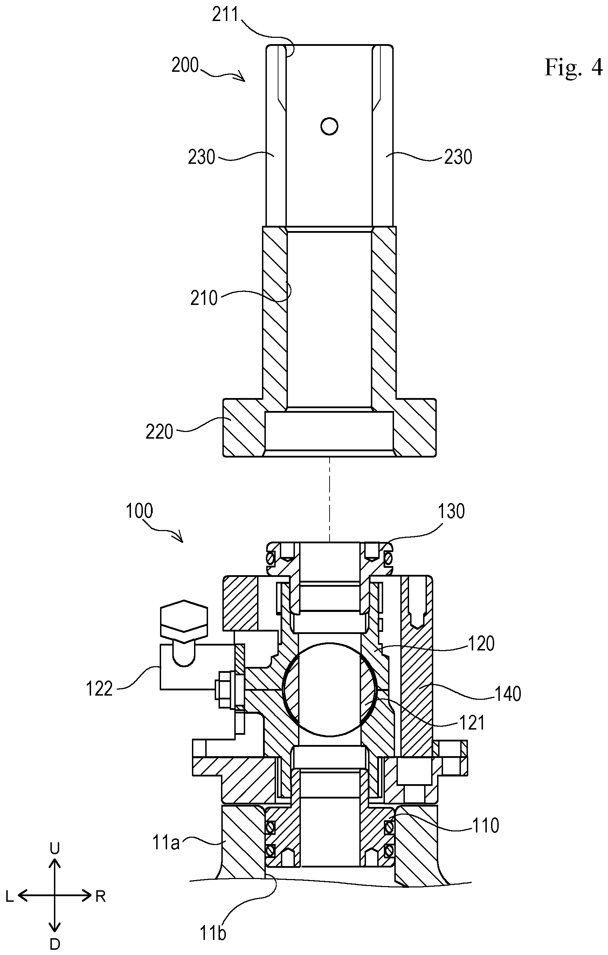

The connection part 100 shown in Figs. 1 and 4 connects the protruding part 11a of the valve device 10 and the mount part 200 described later. The connection part 100 is formed to be able to stop tap water flowing through via the protruding part 11a. The connection part 100 includes a lower valve connection part 110, a valve part 120, an upper valve connection part 130, and an attachment part 140.

The lower valve connection part 110 is disposed in an opening 11b of the protruding part 11a and is connected to a lower part of the valve part 120 described later. The lower valve connection part 110 is formed in a substantially cylindrical shape with its direction of axis oriented in the upward-downward direction. As shown in Fig. 4, the lower valve connection part 110 is formed in a shape in which its lower part is enlarged in diameter with respect to its upper part. The lower part (portion whose diameter is enlarged) of the lower valve connection part 110 is inserted into the opening 11b of the protruding part 11a.

A male screw part is formed by screw processing on the outer peripheral surface of the upper part of the lower valve connection part 110. A groove in which an O-ring is disposed is provided on the outer peripheral surface of the lower part of the lower valve connection part 110. The O-ring is made of a flexible material such as rubber. By providing the O-ring in the groove, a gap between the outer peripheral surface of the lower part of the lower valve connection part 110 and the inner peripheral surface of the opening 11b of the protruding part 11a can be sealed (filled).

The valve part 120 can switch between stopping of water in the flow path branched by the protruding part 11a and releasing of the stopping of water. The valve part 120 is provided with a valve body 121 inside a substantially cylindrical member whose direction of axis is oriented in the upward-downward direction. In addition, the valve part 120 includes an operation part 122 that performs an operation of switching between stopping of water and releasing of the stopping of water with the valve body 121. A female screw part is formed by screw processing at the upper and lower ends of the inner peripheral surface of the valve part 120. The female screw part at the lower part of the valve part 120 engages with the male screw part at the upper part of the lower valve connection part 110. In the present embodiment, a ball valve is adopted as the valve part 120. The valve part 120 is not limited to a ball valve, and various valves such as a butterfly valve can be adopted.

The upper valve connection part 130 is connected to an upper part of the valve part 120. The upper valve connection part 130 is formed in a substantially cylindrical shape obtained by vertically inverting the lower valve connection part 110. As shown in Fig. 4, the lower valve connection part 110 is formed in a shape in which its upper part is enlarged in diameter with respect to its lower part. A male screw part is formed by screw processing on the outer peripheral surface of the lower part of the lower valve connection part 110. The male screw part at the lower part of the lower valve connection part 110 engages with the female screw part at the upper part of the valve part 120. A groove in which an O-ring is disposed is provided on the outer peripheral surface of the upper part of the upper valve connection part 130 in the substantially same manner as in the lower valve connection part 110 described above.

The attachment part 140 can be attached with the mount part 200 described later. The attachment part 140 is formed in a substantially cylindrical shape with its direction of axis oriented in the upward-downward direction. The attachment part 140 is fixed to the protruding part 11a. The attachment part 140 is disposed so as to cover a side surface of the valve part 120.

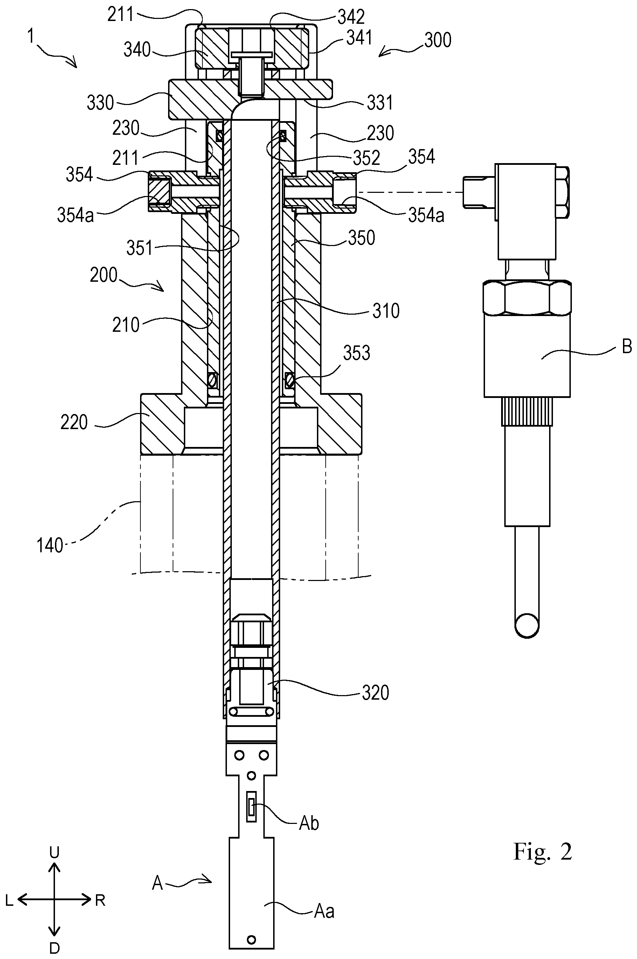

The mount part 200 shown in Figs. 2, 3, 4, and 9 is attached to the connection part 100, and the holder part 300 described later is detachably attached. The mount part 200 is formed in a substantially cylindrical shape with its direction of axis oriented in the upward-downward direction. The mount part 200 is formed in a shape in which its lower end is enlarged in diameter with respect to other portions. The mount part 200 includes a through hole 210, a fixing part 220, a cutout 230, and a first projection 240.

The through hole 210 is a portion penetrating the mount part 200 in the upward-downward direction. A lower end of the through hole 210 is enlarged in diameter according to the shape of the mount part 200. As shown in Figs. 1 and 4, the upper part of the upper valve connection part 130 is inserted into the lower end of the through hole 210. The gap between the inner peripheral surface of the mount part 200 and the outer peripheral surface of the upper part of the upper valve connection part 130 is filled with the O-ring provided in the upper valve connection part 130. A female screw part 211 formed by screw processing is formed on the inner peripheral surface of an upper part of the through hole 210.

The fixing part 220 is a portion fixed to the attachment part 140 of the connection part 100. The fixing part 220 is formed by a portion whose diameter is enlarged of the lower end of the mount part 200. The mount part 200 is fixed to the connection part 100 by fixing the fixing part 220 and an upper end of the attachment part 140 with a fastening such as a bolt.

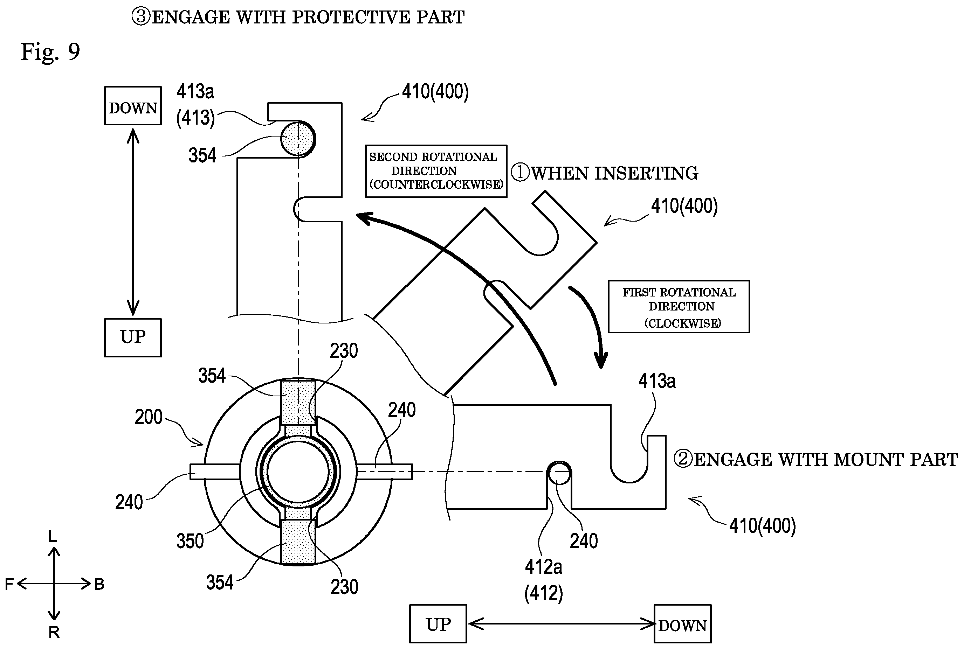

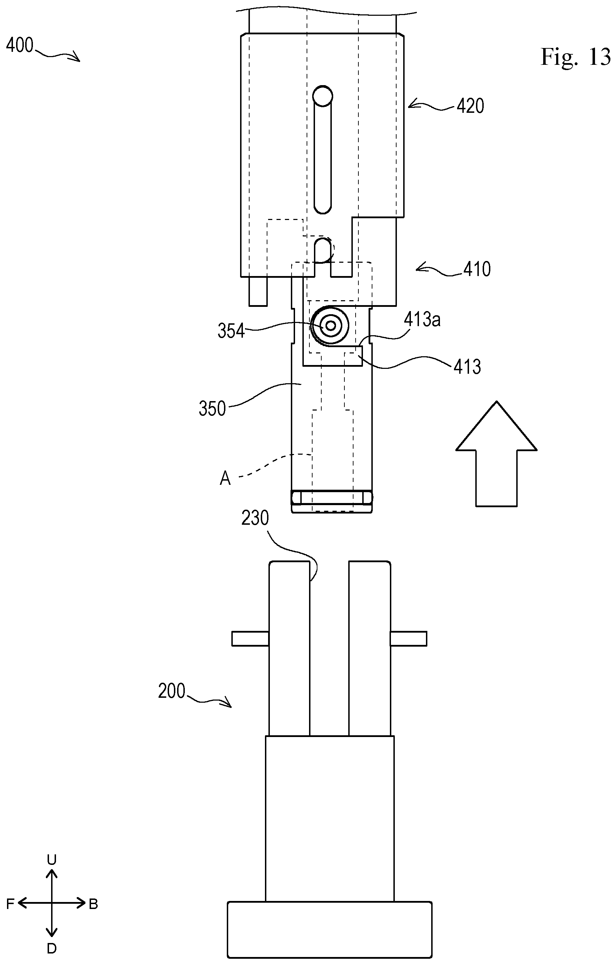

The cutout 230 is a portion cut out so as to extend in the upward-downward direction (direction of axis) on the side surface of the mount part 200. The cutout 230 is formed in a slit shape extending from an upper end of the mount part 200 to a substantially central part in the upward-downward direction (see Fig. 13). A pair of cutouts 230 is formed in right-left direction (see Fig. 9).

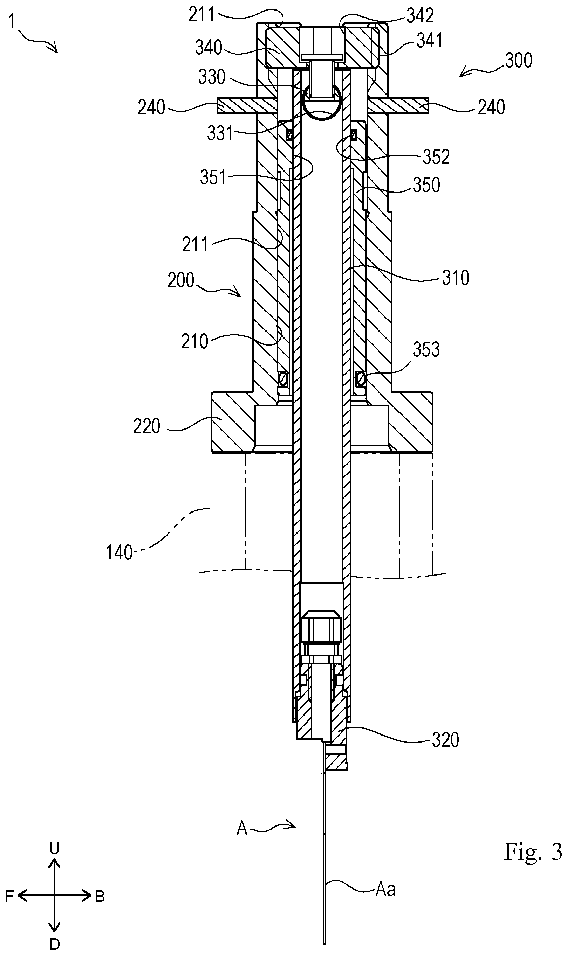

The first projection 240 shown in Fig. 3 projects in the radial direction (the forward-rearward direction in Fig. 3) from the outer peripheral surface of the mount part 200. The first projection 240 is formed in a substantially cylindrical shape with its axis line oriented in the forward-rearward direction. A pair of first projections 240 is provided at an upper part of the mount part 200. The first projection 240 is formed at a position displaced by approximately 90 degrees with respect to the cutout 230 about the axis (center in plan view) of the mount part 200 as a rotational center (see Fig. 9).

The information acquisition device A is attached to the holder part 300 shown in Figs. 2, 3, and 5. The holder part 300 is formed in a shape elongated in the upward-downward direction, and is detachably attached to the mount part 200 by being inserted into the through hole 210. The holder part 300 includes a shaft part 310, an attachment part 320, a guide part 330, a fixing part 340, and a protective part 350.

The shaft part 310 is a substantially cylindrical portion elongated in the upward-downward direction. As shown in Fig. 5, a through hole 311 penetrating the shaft part 310 in the direction of axis (upward-downward direction) is formed in the shaft part 310. The shaft part 310 is formed with a guide insertion hole 312 that penetrates an upper part of the shaft part 310 in the radial direction (right-left direction) and communicates with the through hole 311.

The attachment part 320 is a portion to which the information acquisition device A is attached. The attachment part 320 is formed in a substantially cylindrical shape with its axis line oriented in the upward-downward direction. As shown in Fig. 3, a lower end of the attachment part 320 has a front side surface formed in a planar shape to which the information acquisition device A can be attached. The attachment part 320 is fixed in a state of being inserted into the through hole 311 at a lower end of the shaft part 310.

The guide part 330 shown in Figs. 2 and 5 is a portion guided along the cutout 230 of the mount part 200. The guide part 330 is formed in a substantially cylindrical shape with its axis line oriented in the right-left direction. The guide part 330 is fixed to the shaft part 310 by being inserted into the guide insertion hole 312 of the shaft part 310. The guide part 330 is provided so as to project right and left from the shaft part 310.

The outer diameter of the guide part 330 is formed to a dimension (for example, slightly small) corresponding to the width dimensions (forward-rearward dimensions) of the cutout 230. As illustrated in Fig. 2, in a state where the holder part 300 is attached to the mount part 200, the guide part 330 is positioned in the cutout 230. As a result, the rotation of the holder part 300 with respect to the mount part 200 is restricted. The guide part 330 includes a cable outlet 331.

The cable outlet 331 shown in Fig. 5 is for taking out the cable Ac of the information acquisition device A to the outside of the holder part 300. The cable outlet 331 is formed by cutting out the lower half of the right side portion of the guide part 330. Since the cable outlet 331 is formed, a substantially semicircular opening communicating with the through hole 311 of the shaft part 310 is formed at the right end of the guide part 330 (see Fig. 3).

In the present embodiment, an example in which the guide part 330 is formed separately from the shaft part 310 has been described, but the present invention is not limited to such an aspect. For example, the guide part 330 may be integrally formed with the shaft part 310.

The fixing part 340 shown in Figs. 2, 3, and 5 is a portion detachably fixed to the mount part 200. The fixing part 340 is formed in a substantially cylindrical shape with its axis line oriented in the upward-downward direction. The fixing part 340 is linked to an upper end of the shaft part 310 so as to be rotatable about the axis line oriented in the upward-downward direction.

A male screw part 341 is formed by screw processing on the outer peripheral surface of the fixing part 340. The male screw part 341 of the fixing part 340 engages with the female screw part 211 of the through hole 210 of the mount part 200.

An operation hole 342 for rotating the fixing part 340 is formed in the upper surface of the fixing part 340. The operation hole 342 is formed to be engaged with the jig for attachment and detachment 500 described later. By performing a rotation operation of the fixing part 340, the holder part 300 can be attached to and detached from the mount part 200.

The protective part 350 shown in Figs. 2, 3, and 5 can protect the information acquisition device A. The protective part 350 is formed in a substantially cylindrical shape with its direction of axis oriented in the upward-downward direction. The protective part 350 is disposed in the through hole 210 of the mount part 200, and the shaft part 310 of the holder part 300 is inserted therethrough. The outer diameter of the protective part 350 is formed to be slightly smaller than the inner diameter of the through hole 210 of the mount part 200. The protective part 350 includes an insertion hole 351, a first groove 352, a second groove 353, and a second projection 354.

The insertion hole 351 is a hole penetrating the protective part 350 in the upward-downward direction. The shaft part 310 is inserted into the insertion hole 351. The inner diameter of the insertion hole 351 is formed to be slightly larger than the outer diameter of the shaft part 310.

The first groove 352 is a groove formed to extend in a circumferential direction on the inner peripheral surface of the upper part of the insertion hole 351. In the first groove 352, an O-ring made of a flexible material such as rubber, for example, is disposed. By providing the O-ring in the first groove 352, a gap between the outer peripheral surface of the shaft part 310 and the inner peripheral surface of the insertion hole 351 can be sealed.

The second groove 353 is a groove formed to extend in the circumferential direction on the outer peripheral surface of the lower part of the protective part 350. An O-ring is disposed in the second groove 353 similarly to the first groove 352. By providing the O-ring in the second groove 353, a gap between the outer peripheral surface of the protective part 350 and the inner peripheral surface of the through hole 210 can be sealed.

The second projection 354 projects outward (in the right-left direction) from the side surface of the protective part 350. The second projection 354 is formed in a substantially cylindrical shape with its axis line oriented in the right-left direction. A pair of second projections 354 is provided on the right and left at an upper part of the protective part 350. The second projection 354 is inserted into a hole formed to penetrate the side surface of the protective part 350 in the right-left direction. The outer diameter of the second projection 354 is formed to a dimension (for example, slightly small) corresponding to the width dimensions (forward-rearward dimensions) of the cutout 230 of the mount part 200. The second projection 354 includes a pressure outlet 354a.

The pressure outlet 354a is a portion to which a pressure sensor B (see Fig. 2) capable of acquiring (measuring) the pressure in the water pipe is attached. The pressure outlet 354a is formed so as to penetrate the second projection 354 in the direction of axis (right-left direction). The pressure outlet 354a communicates with the insertion hole 351 of the protective part 350.

A female screw part engageable with the pressure sensor B is formed on the inner surface of the pressure outlet 354a. In the present embodiment, as shown in Figs. 1 and 2, an example is shown in which the pressure sensor B is attached to the second projection 354 on the right of the right and left second projections 354. The second projection 354 on the left is provided with a plug that closes the pressure outlet 354a. The pressure sensor B is not shown in the drawings other than Figs. 1 and 2.

In the present embodiment, an example in which the second projection 354 is formed separately from the body part (portion in the cylindrical shape) of the protective part 350 has been described, but the present invention is not limited to such an aspect. For example, the second projection 354 may be integrally formed with the body part of the protective part 350.

Figs. 1 to 3 show a state in which the holder part 300 as described above is attached to the mount part 200. In this state, the holder part 300 is inserted through the mount part 200 and the connection part 100, whereby the information acquisition device A is disposed inside the pipe conduit part 11 of the valve device 10 (see Fig. 1). Information in the water pipe can be thus acquired. In this case, stopping of water with the valve part 120 of the connection part 100 is released, and the connection part 100 and the mount part 200 communicate with the protruding part 11a of the pipe conduit part 11. Thus, a water pressure of water flowing through the water pipe is applied to the holder part 300 inside the mount part 200 (through hole 210).

Here, as shown in Fig. 2, a gap is formed in the radial direction at a portion below the O-ring in the first groove 352 between the outer peripheral surface of the shaft part 310 of the holder part 300 and the inner peripheral surface of the insertion hole 351 of the protective part 350. The gap communicates with the pressure outlet 354a of the second projection 354. In the present embodiment, the pressure in the water pipe can be acquired through the gap using the pressure sensor B provided in the pressure outlet 354a.

As illustrated in Fig. 2, in a state where the holder part 300 is attached to the mount part 200, the guide part 330 and the second projection 354 are positioned in the cutout 230 of the mount part 200. Thus, the holder part 300 is positioned with respect to the mount part 200. Thus, the information acquisition device A can be positioned via the holder part 300. According to the above configuration, like the information acquisition device A, a device in which the direction (orientation) with respect to the flowing direction of the fluid affects the measurement accuracy can be accurately positioned. In this state, the second projection 354 projects outward with respect to the mount part 200.

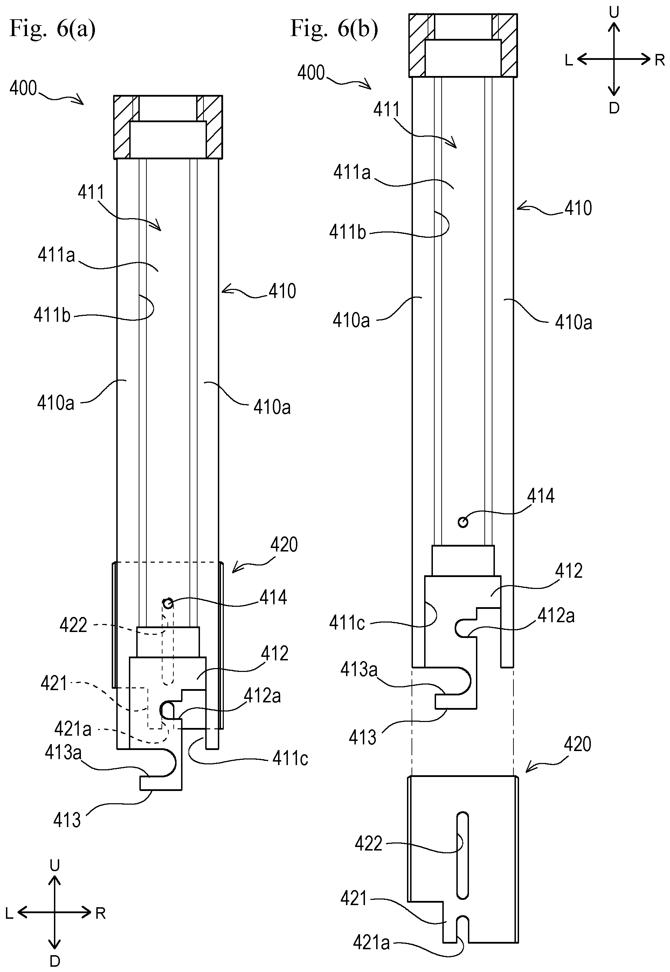

The restriction jig 400 shown in Figs. 6 to 9 is used for attaching and detaching the holder part 300 to and from the mount part 200. The restriction jig 400 is formed in a substantially cylindrical shape into which the mount part 200 can be inserted. The restriction jig 400 engages with the mount part 200 by rotating about a center (axis line in upward-downward direction) in plan view as a rotational center in a state where the mount part 200 is inserted. Hereinafter, as shown in Fig. 9, the clockwise rotational direction in plan view will be referred to as "first rotational direction", and the counterclockwise rotational direction in plan view will be referred to as "second rotational direction". Details of the engagement mode of the restriction jig 400 with respect to the mount part 200 will be described later. The restriction jig 400 is formed in a shape elongated in the upward-downward direction. The restriction jig 400 includes an inner part 410 and an outer part 420.

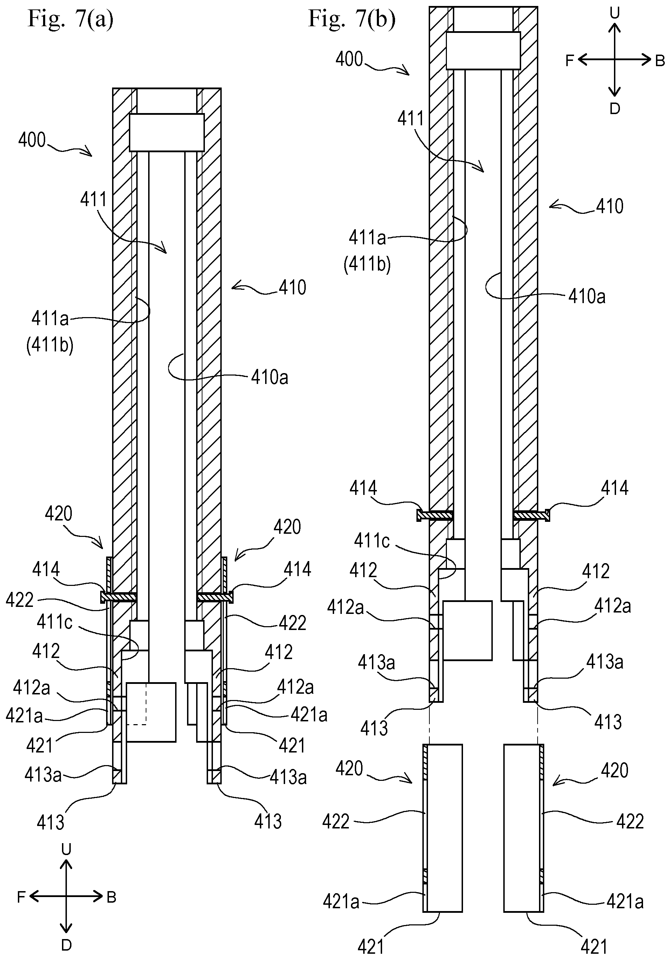

The inner part 410 shown in Figs. 6 and 7 is a substantially cylindrical portion whose axis line is oriented in the upward-downward direction. The inner part 410 is formed with a slit 410a cut out so as to extend in the upward-downward direction from the lower end to the upper part. As shown in Fig. 6, a pair of slits 410a is formed in the radial direction (right-left direction). The inner part 410 is formed in a substantially point symmetrical shape with the axis (center in plan view) as a rotational center. The inner part 410 includes an insertion hole 411, a first mount restriction part 412, a protective part restriction part 413, and a guide pin 414.

The insertion hole 411 is a portion through which the mount part 200, the holder part 300, and the like are inserted. The insertion hole 411 is formed so as to penetrate the inner part 410 in the upward-downward direction. The insertion hole 411 includes a first insertion hole 411a and a second insertion hole 411c.

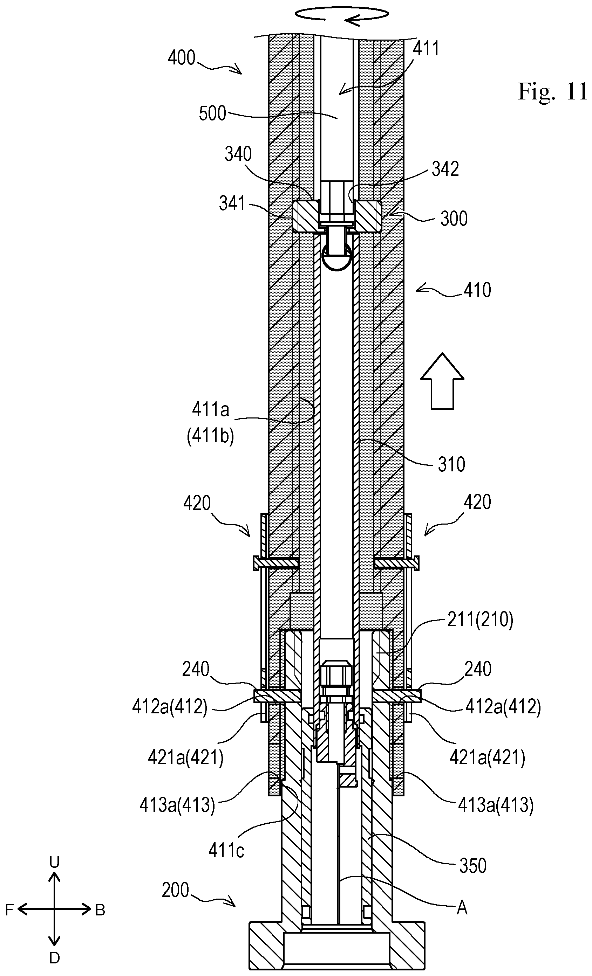

The first insertion hole 411a is a portion constituting an upper part of the insertion hole 411. The inner diameter of the first insertion hole 411a is formed to be substantially equal to the inner diameter of the through hole 210 of the mount part 200. A female screw part 411b is formed by screw processing on the inner peripheral surface of the first insertion hole 411a. The female screw part 411b of the first insertion hole 411a engages with the male screw part 341 formed in the fixing part 340 of the holder part 300 (see Fig. 11).

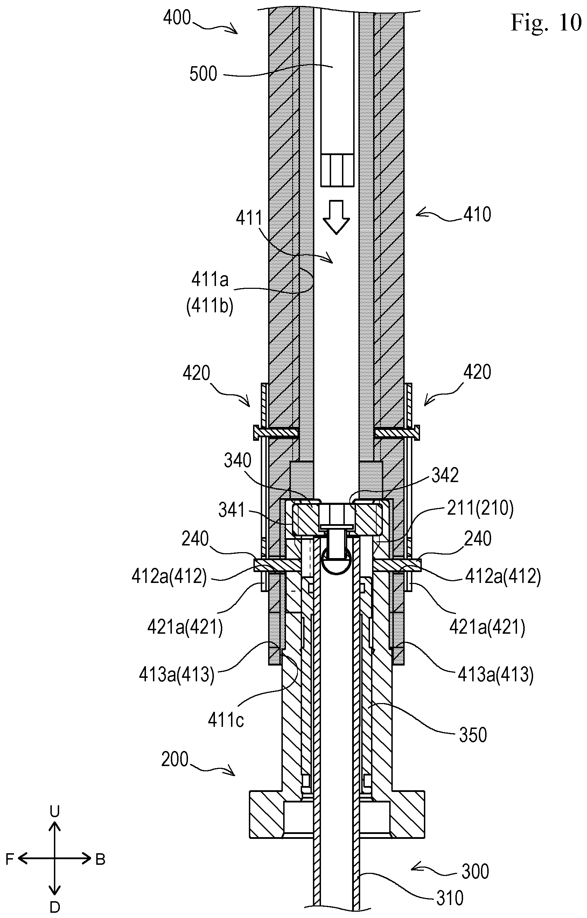

The second insertion hole 411c is a portion constituting a lower part of the insertion hole 411. The dimension in the upward-downward direction of the second insertion hole 411c is smaller than the dimension in the upward-downward direction of the first insertion hole 411a. The second insertion hole 411c is enlarged in diameter with respect to the first insertion hole 411a. The inner diameter of the second insertion hole 411c is formed to be slightly larger than the outer diameter of the mount part 200 so that the mount part 200 can be inserted (see Fig. 10 and the like).

The first mount restriction part 412 is a portion that engages with the mount part 200 to restrict the relative movement in the upward-downward direction with respect to the mount part 200. The first mount restriction part 412 is formed at a lower part of the inner part 410. The first mount restriction part 412 engages with the first projection 240 of the mount part 200. A pair of first mount restriction parts 412 is provided so as to correspond to the pair of first projections 240. The first mount restriction part 412 includes a first engagement part 412a.

The first engagement part 412a shown in Fig. 6 is a portion that engages with the first projection 240. The first engagement part 412a is formed in a shape (substantially groove shape) that is open in the first rotational direction (right direction in Fig. 6) and extends in a rotational direction (circumferential direction). The width dimension (dimension in upward-downward direction) of the first engagement part 412a is formed to be slightly larger than the outer diameter of the first projection 240. In a state where the first engagement part 412a is engaged with the first projection 240, relative movement of the inner part 410 (first mount restriction part 412) and the mount part 200 in the upward-downward direction is restricted (see Fig. 9 and the like).

The protective part restriction part 413 shown in Fig. 6 is a portion that engages with the protective part 350 to restrict the relative movement in the upward-downward direction with respect to the protective part 350. The protective part restriction part 413 is formed at a lower end of the inner part 410. The protective part restriction part 413 engages with the second projection 354 of the protective part 350. A pair of protective part restriction parts 413 is provided so as to correspond to the pair of second projections 354. The protective part restriction part 413 includes a protective part engagement part 413a.

The protective part engagement part 413a is a portion that engages with the second projection 354. The protective part engagement part 413a is formed in a shape (substantially groove shape) that is open in the second rotational direction (left direction in Fig. 6) and extends in a rotational direction (circumferential direction). The width dimension (dimension in upward-downward direction) of the protective part engagement part 413a is formed to be slightly larger than the outer diameter of the second projection 354. In a state where the protective part engagement part 413a is engaged with the second projection 354, relative movement of the inner part 410 (first mount restriction part 412) and the protective part 350 in the upward-downward direction is restricted (see Fig. 9 and the like).

The guide pin 414 guides the movement in the upward-downward direction of the outer part 420 described later. The guide pin 414 is provided so as to project in the radial direction (the forward-rearward direction in Fig. 7) from the outer peripheral surface of the inner part 410. The guide pin 414 is formed in a substantially cylindrical shape with its axis line oriented in the forward-rearward direction. A pair of guide pins 414 is provided on the front side and the rear side.

The outer part 420 shown in Figs. 6 and 7 is a portion provided on the radially outer side of the inner part 410. The outer part 420 is provided so as to cover the outer peripheral surface of the inner part 410 at the lower part of the inner part 410. The outer part 420 is formed in a plate shape having a curved surface corresponding to the outer peripheral surface of the inner part 410. As shown in Fig. 6, a pair of outer parts 420 is provided on the front side and the rear side. The pair of outer parts 420 is formed in a substantially point symmetrical shape with the axis (center in plan view) of the restriction jig 400 as a rotational center. The outer part 420 is provided to be relatively movable in the upward-downward direction with respect to the inner part 410. The outer part 420 includes a second mount restriction part 421 and a guide groove 422.

The second mount restriction part 421 is a portion that engages with the mount part 200 to restrict the relative movement in the rotational direction with respect to the mount part 200. The second mount restriction part 421 is formed at a lower end of the outer part 420. The second mount restriction part 421 engages with the first projection 240 of the mount part 200. The second mount restriction part 421 is provided to each of the pair of outer parts 420 so as to correspond to the pair of first projections 240. The second mount restriction part 421 includes a second engagement part 421a.

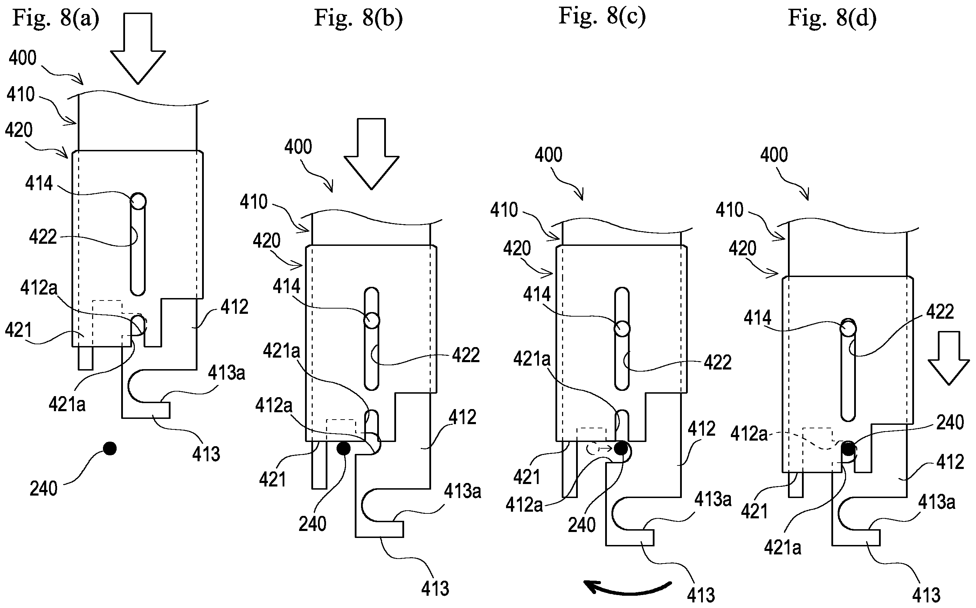

The second engagement part 421a shown in Fig. 6 is a portion that engages with the first projection 240. The second engagement part 421a is formed in a shape (substantially groove shape) that is open downward and extends in the upward-downward direction. The width dimension (dimension in rotational direction) of the second engagement part 421a is formed to be slightly larger than the outer diameter of the first projection 240. As shown in Fig. 6(a), the second engagement part 421a is formed such that the position in the circumferential direction coincides with the position in the circumferential direction of the first engagement part 412a. In a state where the second engagement part 421a is engaged with the first projection 240, relative movement of the outer part 420 (second mount restriction part 421) and the mount part 200 in the rotational direction is restricted (see Fig. 8(d) and the like).

The guide groove 422 shown in Figs. 6 and 7 guides the movement of the outer part 420 in the upward-downward direction with respect to the inner part 410. The guide groove 422 penetrates the outer part 420 and is formed in a shape (substantially groove shape) extending in the upward-downward direction. As shown in Figs. 6(a) and 7(a), the guide pin 414 is inserted into the guide groove 422. The movement of the outer part 420 in the upward-downward direction with respect to the inner part 410 is guided by the relative movement of the guide pin 414 in the guide groove 422. The guide pin 414 can prevent the outer part 420 from falling off from the inner part 410.

The jig for attachment and detachment 500 shown in Figs. 10 and 11 attaches and detaches the holder part 300 to and from the mount part 200 in a state where the restriction jig 400 is engaged with the mount part 200. The jig for attachment and detachment 500 is formed in a substantially cylindrical shape elongated in the upward-downward direction with its axis line oriented in the upward-downward direction. The jig for attachment and detachment 500 is formed to be insertable into the insertion hole 411 of the restriction jig 400 (inner part 410). The tip of the jig for attachment and detachment 500 is formed in a shape engageable with the operation hole 342 formed in the fixing part 340 of the holder part 300. The fixing part 340 can be rotated by rotating the jig for attachment and detachment 500 about the axis line in a state where the tip of the jig for attachment and detachment 500 is engaged with the operation hole 342 of the fixing part 340.

The configuration of the attachment device 1 has been described above. Hereinafter, a method for attaching and detaching the information acquisition device A using the attachment device 1 as described above will be described with reference to Figs. 8 to 13. In the following drawings, the protective part 350 in Fig. 9 and the inner part 410 in Figs. 10 and 11 are colored to easily distinguish the members from each other.

First, a method for detaching the information acquisition device A will be described. Hereinafter, as shown in Fig. 1, an example in which the holder part 300 is attached to the mount part 200, and the information acquisition device A disposed inside the pipe conduit part 11 of the valve device 10 is detached, will be described.

When detaching the information acquisition device A, an operator pulls up the holder part 300 with respect to the mount part 200 using the restriction jig 400 and the jig for attachment and detachment 500 from the outside (upper side) of the valve box to detach the information acquisition device A. At this time, the operator first detaches the sensor cover 13 from the sensor housing part 12.

Next, as shown in Fig. 8(a), the operator lowers the restriction jig 400, and inserts the mount part 200 into the second insertion hole 411c of the restriction jig 400 (inner part 410) (see Fig. 10). At this time, the orientation of the rotational direction of the restriction jig 400 is adjusted such that the restriction jig 400 does not interfere with the second projection 354 of the protective part 350. In the present embodiment, the orientation of the rotational direction of the restriction jig 400 is adjusted such that the

second projection 354 is positioned in the slit 410a of the inner part 410.

As shown in Fig. 8(b), as the restriction jig 400 lowers, the lower end of the outer part 420 abuts the first projection 240 of the mount part 200. When the restriction jig 400 is further lowered in this state, the outer part 420 relatively moves upward with respect to the inner part 410.

In the present embodiment, the restriction jig 400 is lowered until the upper end of the mount part 200 abuts a step between the first insertion hole 411a and the second insertion hole 411c of the inner part 410 (see Fig. 10). In the present embodiment, as shown in Fig. 8(c), in a state where the upper end of the mount part 200 abuts the step, the positions of the first engagement part 412a and the first projection 240 in the upward-downward direction substantially coincide with each other. In this state, the positions of the protective part engagement part 413a and the second projection 354 in the upward-downward direction substantially coincide with each other.

Next, as shown in Figs. 8(c) and 9, the operator rotates the restriction jig 400 in the first rotational direction (clockwise). As a result, the first projection 240 is positioned in the first engagement part 412a and relatively moves in the rotational direction in the first engagement part 412a. In this state, the first projection 240 is engaged by the first engagement part 412a, and the relative movement in the upward-downward direction between the restriction jig 400 (inner part 410) and the mount part 200 is restricted.

As shown in Fig. 8(d), in a case where the position of the second engagement part 421a of the outer part 420 in the rotational direction coincides with the first projection 240 as the restriction jig 400 rotates, the restriction of the downward movement of the outer part 420 with the first projection 240 is released, and the outer part 420 moves downward because of gravity. As a result, the first projection 240 relatively moves in the upward-downward direction in the second engagement part 421a. In this state, the first projection 240 is engaged by the second engagement part 421a, and the relative movement in the rotational direction between the restriction jig 400 (outer part 420) and the mount part 200 is restricted.

Fig. 10 shows a state in which the restriction jig 400 is engaged with the mount part 200 as described above. In this state, as described above, the relative movement of the restriction jig 400 with respect to the mount part 200 in the upward-downward direction and the rotational direction is restricted.

Next, as shown in Fig. 10, the operator inserts the jig for attachment and detachment 500 into the restriction jig 400. The tip of the jig for attachment and detachment 500 is caused to engage with the operation hole 342 formed in the fixing part 340 of the holder part 300 (see Fig. 11).

Next, the operator operates the jig for attachment and detachment 500 to rotate the fixing part 340 in the direction of detaching the holder part 300 from the mount part 200. When the fixing part 340 screwed into the female screw part 211 of the mount part 200 is rotated in the direction to be detached, the portion of the holder part 300 excluding the protective part 350 (shaft part 310, attachment part 320, guide part 330, and fixing part 340) and the information acquisition device A lift with respect to the mount part 200.

In this state, the guide part 330 is guided along the cutout 230 of the mount part 200, and thus, the upward movement of the holder part 300 is guided. In the present embodiment, since the guide part 330 is provided, the cable Ac taken out from the cable outlet 331 is prevented from being caught with the lifting. In addition, the fixing part 340 is detached from the mount part 200 with the lifting.

After the fixing part 340 is detached from the mount part 200, the portion of the holder part 300 excluding the protective part 350 and the information acquisition device A move (lift) to the restriction jig 400 side. The above-described movement can be performed by pushing up using water pressure in the water pipe or pulling up with the jig for attachment and detachment 500.

As shown in Fig. 11, when the operator further rotates the fixing part 340 in a state where the fixing part 340 is detached from the mount part 200, the fixing part 340 is screwed into the female screw part 411b of the inner part 410. When the fixing part 340 is further rotated, the holder part 300 and the information acquisition device A lift with respect to the inner part 410.

Here, in a state where the fixing part 340 is detached from the mount part 200, the restriction jig 400 receives the water pressure in the water pipe through the holder part 300. In the present embodiment, since the movement of the restriction jig 400 in the upward-downward direction with respect to the mount part 200 is restricted, the restriction jig 400 can be prevented from lifting with the water pressure even when the water pressure is applied to the holder part 300.

In the present embodiment, since the movement of the restriction jig 400 with respect to the mount part 200 in the rotational direction is restricted, the restriction jig 400 can be prevented from rotating (corotating) along with the rotation of the fixing part 340 using the jig for attachment and detachment 500.

As shown in Fig. 11, the operator lifts the information acquisition device A by operating the jig for attachment and detachment 500 until the information acquisition device A is positioned inside the protective part 350 (above the valve part 120). In this state, the operator operates the valve part 120 of the connection part 100 to stop water. In this state, no water pressure is applied to the holder part 300.

Next, the operator performs the operation shown in Fig. 8 in reverse to release the restriction of the restriction jig 400 with respect to the mount part 200. That is, the outer part 420 is moved upward, and the restriction jig 400 (the inner part 410) is rotated in the second rotational direction (counterclockwise).

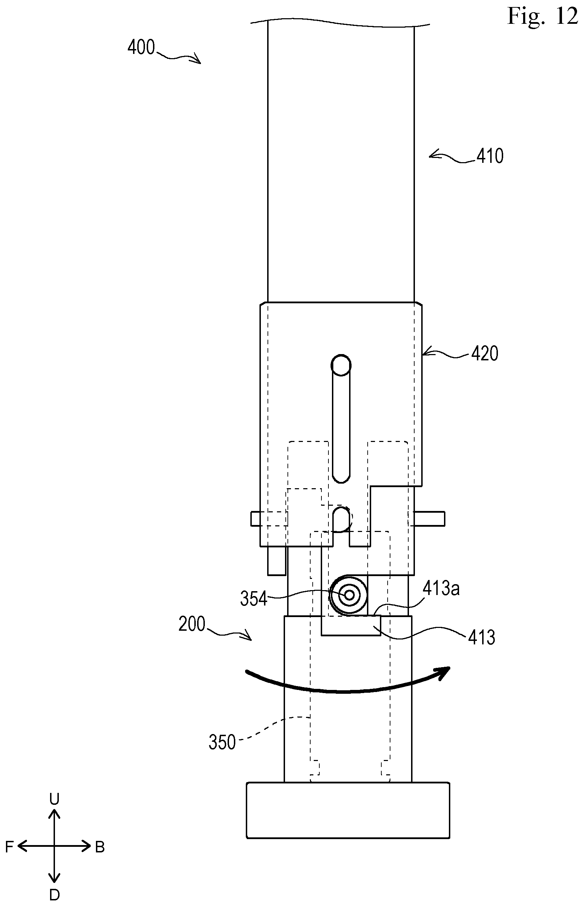

In addition, as shown in Figs. 9 and 12, the operator further rotates the restriction jig 400 in the second rotational direction (counterclockwise). As a result, the second projection 354 is positioned in the protective part engagement part 413a and relatively moves in the rotational direction in the protective part engagement part 413a. In this state, the second projection 354 is engaged by the protective part engagement part 413a, and the relative movement in the upward-downward direction between the restriction jig 400 (inner part 410) and the protective part 350 is restricted.

In addition, as shown in Fig. 13, the operator pulls up the restriction jig 400 in a state where the protective part 350 is engaged as described above. The holder part 300 and the information acquisition device A can be thus detached from the mount part 200. According to the above configuration, the information acquisition device A can be detached while the information acquisition device A is protected by the protective part 350. By detaching the information acquisition device A as described above, the operator can perform maintenance such as replacement of the information acquisition device A.

Next, a method for attaching the information acquisition device A will be described. Attachment of the information acquisition device A can be performed through a procedure reverse to the method for detaching the information acquisition device A described above. Thus, in the following description, portions overlapping with the above description will be appropriately omitted.

As in the state shown in Fig. 13, the operator lowers the restriction jig 400 provided with the holder part 300 and the information acquisition device A toward the mount part 200, and attaches the protective part 350 to the mount part 200. Next, as shown in Fig. 9, the restriction jig 400 is rotated in the first rotational direction (clockwise) to engage the restriction jig 400 with the mount part 200. In this state, the relative movement of the restriction jig 400 with respect to the mount part 200 in the upward-downward direction and the rotational direction is restricted.

Next, the operator operates the valve part 120 of the connection part 100 to release stopping of water. The shaft part 310 and the like of the holder part 300 can be thus inserted into the mount part 200.

Next, the operator engages the jig for attachment and detachment 500 with the fixing part 340 of the holder part 300, and screws the fixing part 340 with respect to the restriction jig 400 so as to lower the fixing part 340 (see Fig. 11). With the lowering, the fixing part 340 is detached from the restriction jig 400, and then the fixing part 340 (the portion of the holder part 300 excluding the protective part 350) is further rotated to screw the fixing part 340 into the mount part 200. The holder part 300 and the information acquisition device A can be thus attached to the mount part 200 (see Figs. 1 and 10).

According to the method for attaching and detaching the information acquisition device A using the attachment device 1 as described above, the movement of the restriction jig 400 in the rotational direction and the upward-downward direction with respect to the mount part 200 can be restricted only by relatively moving the restriction jig 400 with respect to the mount part 200 in the rotational direction, and in this state, the holder part 300 and the information acquisition device A can be easily attached and detached by using the jig for attachment and detachment 500.

In addition, according to the present embodiment, unlike the case where the mount part 200 and the holder part 300 are fixed by fixing flanges using bolts, nuts, or the like, it is unnecessary to perform fastening work or the like of bolts, nuts, or the like when the holder part 300 is attached or detached. Thus, the attachment device 1 can be downsized, and space saving can be achieved. In addition, with this configuration, the holder part 300 can be easily attached and detached even in a narrow space such as in a valve box.

As described above, the attachment device 1 according to the present embodiment is an attachment device capable of attaching the information acquisition device A that acquires information in a pipe conduit (the pipe conduit part 11) through which a fluid flows, the attachment device including:
the mount part 200 to be attached to the pipe conduit (the pipe conduit part 11), the mount part including the through hole 210 communicating with the opening 11b formed in the pipe conduit (the pipe conduit part 11);
the holder part 300 that is detachably attached to the mount part 200 by being inserted into the through hole 210 and to which the information acquisition device A is to be attached; and
a jig (the restriction jig 400) used for attaching and detaching the holder part 300 to and from the mount part 200,
in which
the restriction jig 400 includes
   a first restriction part (the first mount restriction part 412) that engages with the mount part 200 to restrict relative movement in a direction of axis of the opening 11b with respect to the mount part 200, and
   a second restriction part (the second mount restriction part 421) that engages with the mount part 200 to restrict relative movement in a rotational direction around an axis line of the opening 11b with respect to the mount part 200, and
the first mount restriction part 412 and the second mount restriction part 421 can be engaged with the mount part 200 by relatively moving the restriction jig 400 in the rotational direction with respect to the mount part 200.

With such a configuration, attachment and detachment of the information acquisition device A can be suitably performed. That is, the movement of the mount part 200 in the rotational direction and the direction of axis with respect to the restriction jig 400 can be restricted only by relatively moving the restriction jig 400 with respect to the mount part 200 in the rotational direction, and in this state, the holder part 300 can be easily attached to and detached from the mount part 200 by using the restriction jig 400.

The mount part 200 includes the first projection 240 projecting outward,
the first mount restriction part 412 includes the first engagement part 412a that is open in the rotational direction and is engageable with the first projection 240 as the first mount restriction part 412 moves in the rotational direction, and
the second mount restriction part 421 includes the second engagement part 421a that is open downward and is engageable with the first projection 240 as the second mount restriction part 421 moves downward in a case where positions of the second mount restriction part 421 and the first projection 240 in the rotational direction coincide with each other.

With such a configuration, by engaging the first engagement part 412a and the second engagement part 421a with the first projection 240, the movement of the restriction jig 400 in the upward-downward direction and the rotational direction with respect to the mount part 200 can be restricted.

The holder part 300 includes the fixing part 340 to be detachably fixed to the mount part 200 by a predetermined operation, and
the restriction jig 400 includes a fixed part (the first insertion hole 411a) to which the fixing part 340 detached from the mount part 200 is to be detachably fixed.

With such a configuration, the holder part 300 can be fixed to the restriction jig 400, and the holder part 300 can be easily detached.

In the attachment device 1 according to the present embodiment,
the mount part 200 is formed with the cutout 230 extending in the direction of axis, and
the holder part 300 includes
   the shaft part 310 to which the information acquisition device A is to be attached and in which the cable Ac of the information acquisition device A can be wired,
   the guide part 330 provided in the shaft part 310 and guided along the cutout 230, and
   the cable outlet 331 through which the cable Ac inside the shaft part 310 can be taken out to the outside of the holder part 300.

With this configuration, the guide part 330 is guided to the cutout 230, whereby the information acquisition device A can be positioned. In addition, the guide part 330 can prevent the cable Ac from being caught.

The holder part 300 includes
the shaft part 310 to which the information acquisition device A is to be attached, and
the protective part 350 disposed in the through hole 210 of the mount part 200, the protective part 350 being formed with the insertion hole 351 through which the shaft part 310 and the information acquisition device A are inserted, the protective part 350 being capable of protecting the information acquisition device A.

With such a configuration, by providing the protective part 350, the information acquisition device A can be prevented from coming into contact with the mount part 200 or the like when the holder part 300 is attached or detached.

The restriction jig 400 includes a third restriction part (the protective part restriction part 413) that restricts relative movement in the direction of axis with respect to the protective part 350 in a state where the restriction jig 400 is engaged with the protective part 350, and
the protective part restriction part 413 can be engaged with the protective part 350 by relatively moving the restriction jig 400 in the rotational direction with respect to the protective part 350 in a state where engagement of the first mount restriction part 412 and the second mount restriction part 421 with respect to the mount part 200 is released.

With such a configuration, the relative movement of the protective part 350 with respect to the restriction jig 400 in the direction of axis can be restricted only by relatively moving the restriction jig 400 with respect to the protective part 350 in the rotational direction, and in this state, the protective part 350 can be easily attached and detached using the restriction jig 400.

The protective part 350 includes the second projection 354 projecting outward with respect to the mount part 200, and
the protective part restriction part 413 includes a third engagement part (the protective part engagement part 413a) that is open in the rotational direction and is engageable with the second projection 354 as the protective part restriction part 413 moves in the rotational direction.

With such a configuration, by engaging the protective part engagement part 413a with the second projection 354, the movement of the protective part 350 in the direction of axis with respect to the restriction jig 400 can be restricted.

The second projection 354 includes the pressure outlet 354a through which a pressure of the fluid in the pipe conduit (the pipe conduit part 11) can be extracted.

With such a configuration, the second projection 354 can be used as a portion for extracting the pressure of the fluid.

A method for attaching and detaching the information acquisition device A according to the present embodiment is
a method for attaching and detaching the information acquisition device A, the method using the attachment device 1 according to the present embodiment, the method including:
engaging the first mount restriction part 412 and the second mount restriction part 421 with the mount part 200 by rotating the restriction jig 400 in the rotational direction with respect to the mount part 200; and
attaching and detaching the holder part 300 to and from the mount part 200 in a state where the first mount restriction part 412 and the second mount restriction part 421 are engaged with the mount part 200.

With such a configuration, attachment and detachment of the information acquisition device A can be suitably performed.

The restriction jig 400 according to the present embodiment is an embodiment of the jig according to the present invention.

The first mount restriction part 412 according to the present embodiment is an embodiment of the first restriction part according to the present invention.

The second mount restriction part 421 according to the present embodiment is an embodiment of the second restriction part according to the present invention.

The first insertion hole 411a according to the present embodiment is an embodiment of the fixed part according to the present invention.

The protective part restriction part 413 according to the present embodiment is an embodiment of the third restriction part according to the present invention.

The protective part engagement part 413a according to the present embodiment is an embodiment of the third engagement part according to the present invention.

The pipe conduit part 11 according to the present embodiment is an embodiment of the pipe conduit according to the present invention.

The first embodiment of the present invention has been described above, but the present invention is not limited to the above configuration, and various modifications can be made within the scope of the invention described in the claims.

For example, the shape and the like of the attachment device 1 described in the present embodiment are merely examples, are not limited to the examples described above, and can be changed as appropriate. In particular, the shape of the restriction jig 400 (inner part 410 and outer part 420) is not limited to the above-described example, and various shapes engageable with the first projection 240 can be adopted.

In the present embodiment, an example in which the protective part restriction part 413 is provided in the restriction jig 400 has been described, but the present invention is not limited to such an aspect. For example, the protective part restriction part 413 does not have to be provided. In this case, the protective part 350 does not have to be provided in the attachment device 1.

In the present embodiment, the information acquisition device A has a configuration in which the strain gauge Ab is provided on the surface of the plate part Aa, but the present invention is not limited to such an aspect. Any configuration can be adopted as the information acquisition device A.

In the present embodiment, the information acquisition device A acquires the flow rate of water in a water pipe, but the present invention is not limited to such an aspect. For example, the information acquisition device A may acquire other various types of information such as pressure, temperature, vibration, sound, image (video), and turbidity in piping.

Here, in the case of acquiring the temperature, the image (video), and the turbidity in piping, a thermometer, a camera, or a turbidity meter may be used at the tip of the holder part 300 instead of or in addition to the information acquisition device A according to the present embodiment.

In the present embodiment, an example in which the information acquisition device A is provided so as to be positioned in the pipe conduit part 11 of the valve device 10 has been described, but the present invention is not limited to such an aspect. For example, the information acquisition device A may be provided so as to be positioned in a pipe conduit of piping (water pipe or the like).

In the present embodiment, an example in which the attachment device 1 is attached to the valve device 10 has been described, but the present invention is not limited to such an aspect. For example, the attachment device 1 may be attached to a faucet or the like provided in piping (water pipe or the like).

In the present embodiment, an example in which a water pipe is adopted as the piping in which the attachment device 1 is installed has been described, but the present invention is not limited to such an aspect. The attachment device 1 can be installed in various piping (pipe conduits) through which a fluid flows, such as other metal pipes and piping (resin pipes) formed of resin.

### INDUSTRIAL APPLICABILITY

The present invention is applicable to an attachment device to which an information acquisition device that acquires information in a pipe conduit through which a fluid flows can be attached, and a method for attaching and detaching the information acquisition device.

### REFERENCE SIGNS LIST

1: Attachment device
100: Connection part
200: Mount part
300: Holder part
400: Restriction jig
500: Jig for attachment and detachment
A: Information acquisition device

## Claims

1. An attachment device capable of attaching an information acquisition device that acquires information in a pipe conduit through which a fluid flows, the attachment device comprising:
a mount part to be attached to the pipe conduit, the mount part including a through hole communicating with an opening formed in the pipe conduit;
a holder part that is detachably attached to the mount part by being inserted into the through hole and to which the information acquisition device is to be attached; and
a jig used for attaching and detaching the holder part to and from the mount part,
wherein
the jig includes
a first restriction part that engages with the mount part to restrict relative movement in a direction of axis of the opening with respect to the mount part, and
a second restriction part that engages with the mount part to restrict relative movement in a rotational direction around an axis line of the opening with respect to the mount part, and
the first restriction part and the second restriction part can be engaged with the mount part by relatively moving the jig in the rotational direction with respect to the mount part.

2. The attachment device according to claim 1, wherein
the mount part includes a first projection projecting outward,
the first restriction part includes a first engagement part that is open in the rotational direction and is engageable with the first projection as the first restriction part moves in the rotational direction, and
the second restriction part includes a second engagement part that is open downward and is engageable with the first projection as the second restriction part moves downward in a case where positions of the second restriction part and the first projection in the rotational direction coincide with each other.

3. The attachment device according to claim 1, wherein
the holder part includes a fixing part to be detachably fixed to the mount part by a predetermined operation, and
the jig includes a fixed part to which the fixing part detached from the mount part is to be detachably fixed.

4. The attachment device according to claim 1, wherein
the mount part is formed with a cutout extending in the direction of axis, and
the holder part includes
a shaft part to which the information acquisition device is to be attached and in which a cable of the information acquisition device can be wired,
a guide part provided in the shaft part and guided along the cutout, and
a cable outlet through which the cable inside the shaft part can be taken out to an outside of the holder part.

5. The attachment device according to claim 1, wherein
the holder part includes
a shaft part to which the information acquisition device is to be attached, and
a protective part disposed in the through hole of the mount part, the protective part being formed with an insertion hole through which the shaft part and the information acquisition device are inserted, the protective part being capable of protecting the information acquisition device.

6. The attachment device according to claim 5, wherein
the jig includes a third restriction part that restricts relative movement in the direction of axis with respect to the protective part in a state where the jig is engaged with the protective part, and
the third restriction part can be engaged with the protective part by relatively moving the jig in the rotational direction with respect to the protective part in a state where engagement of the first restriction part and the second restriction part with respect to the mount part is released.

7. The attachment device according to claim 6, wherein
the protective part includes a second projection projecting outward with respect to the mount part, and
the third restriction part includes a third engagement part that is open in the rotational direction and is engageable with the second projection as the third restriction part moves in the rotational direction.

8. The attachment device according to claim 7, wherein the second projection includes a pressure outlet through which a pressure of the fluid in the pipe conduit can be extracted.

9. A method for attaching and detaching an information acquisition device, the method using the attachment device according to any one of claims 1 to 8, the method comprising:
engaging the first restriction part and the second restriction part with the mount part by rotating the jig in the rotational direction with respect to the mount part; and
attaching and detaching the holder part to and from the mount part in a state where the first restriction part and the second restriction part are engaged with the mount part.
